# EUROPEAN PATENT SPECIFICATION

(11) **EP 2 192 740 B1**
(45) Date of publication and mention of the grant of the patent: **20.06.2012**
(21) Application number: 09174993.7
(22) Date of filing: 04.11.2009
(51) Int. Cl.: H04L 29/06, H04N 7/24, H04N 7/26, H04L 12/64

(54) **Method and apparatus for receiving content**
Verfahren und Vorrichtung zum Empfangen von Inhalt
Appareil et procédé pour recevoir un contenu

(30) Priority: 26.11.2008 EP 08305841
(43) Date of publication of application: 02.06.2010
(73) Proprietor: Thomson Licensing, 92130 Issy-les-Moulineaux (FR)
(72) Inventor: Li, Jun, 92648 Boulogne Cedex (FR); Liao, Ning, 92648 Boulogne Cedex (FR); Zhu, Li Hua, 92648 Boulogne Cedex (FR)
(74) Representative: Ruellan-Lemonnier, Brigitte

(56) References cited:
- EP-A- 1 643 716
- US-A1- 2008 037 527
- DO ET AL: "Robust video-on-demand streaming in peer-to-peer environments" COMPUTER COMMUNICATIONS, ELSEVIER SCIENCE PUBLISHERS BV, AMSTERDAM, NL, vol. 31, no. 3, 31 January 2008 (2008-01-31), pages 506-519, XP022442383 ISSN: 0140-3664
- NGUYEN T ET AL: "Multiple Sender Distributed Video Streaming" IEEE TRANSACTIONS ON MULTIMEDIA, IEEE SERVICE CENTER, PISCATAWAY, NJ, US, vol. 6, no. 2, 1 April 2004 (2004-04-01), pages 315-326, XP011109142 ISSN: 1520-9210

## Description

### TECHNICAL FIELD

The present invention relates in general to communication networks, and more particularly, relates to receiving content.

### BACKGROUND

With the development of technologies, media programs such as TV broadcast/multicast and video broadcast/multicast are delivered to end users by using data packets, such as Internet Protocol (IP) packets, Asynchronous Transfer Mode (ATM) cells and similar packet types.

Unlike the traditional way of playing digital media content by end users after the entire media file or media clip has been downloaded, the content of a media file or a media clip is streamed to the end users using either multicast/broadcast or unicast mode, and the media content will be decoded and played after a predefined amount of data stream of the media content is buffered by a receiver. Herein, a data stream is a sequence of digitally encoded coherent signals used to transmit or receive information that is in transmission. For example, in the H.264, the digitally encoded coherent signal is the access unit (the encoded data of a picture). One feature of the data stream is there is a time constraint on the access unit, which means the access units in the data stream are sent one after another according to their time stamp, and the later access unit will be sent after the previous one.

Due to the transmission environment, the data stream of the content may not be transmitted to the end user with a stable bit rate. This will result in intermittent playback of the content. Therefore, in order to obtain a smooth playback of the content, a buffer of predefined size is used to compensate for the unpredictable delivery of the content over an erratic network by buffering some data stream of the content before starting playing it. Normally, the size of the buffer varies as a function of the transmission quality of the network. Generally, the worse the transmission quality of network is, the larger the size of buffer needs to be. Moreover, the size of buffer is usually large in a wireless network and other networks whose transmission qualities are time-varying. However, as the buffer size becomes larger, more time is needed to buffer the data stream of a content when switching to the media content. It is desirable to diminish the delay caused by buffering the stream data when switching to the content.

US 2008/037527 A1 (CHAN SHUENG H G [CN] ET AL) discloses a scalable Media-on-Demand method to a large group of users in the Internet. This method makes use of peer buffering capabilities to collaborate in the distribution and downloading of media, facilitated by a central repository for the search of optimal peers as parent nodes to connect to and for the support of advanced features such as fast forward and backward plays.

### SUMMARY

According to an aspect of present invention, a method is provided according to claim 1.

According to an aspect of the present invention, a client device is provided for receiving a content according to claim 7.

According to the aspect of the present invention, it reduces the delay when changing to other content.

It is to be understood that additional features and advantages of the invention will become apparent to a man skilled in the art after reading the below detailed description.

### BRIEF DESCRIPTION OF THE DRAWINGS

The accompanying drawings, which are included to provide a further understanding of the invention and are incorporated in and constitute a part of this application, illustrate the embodiment of the invention together with the description which serves to explain the principle of the invention. In the drawings:
Fig. 1 is a flow chart illustrating the method for changing channel according to an embodiment of the present invention;
Fig. 2 is a schematic diagram illustrating a system according to the embodiment of the present invention; and
Fig. 3 is a block diagram of the client device for changing channel according to the embodiment of the present invention.

### DETAILED DESCRIPTION

The embodiment of the present invention will now be described in detail in conjunction with drawings. In the following description, some detailed descriptions of known functions and configurations may be omitted for clarity and conciseness.

According to an embodiment of the present invention, a typical network comprises at least one video server, at least one cache server and at least one client device. The client device is configured to receive the video data. The video server is configured to provide video data. The video data is streamed either in the video server or in other device that is communicatively connected to the video server. The cache server is configured to cache the video data from the video server, and it is also configured to provide cached video data in response to the request for the cached data from the client device.

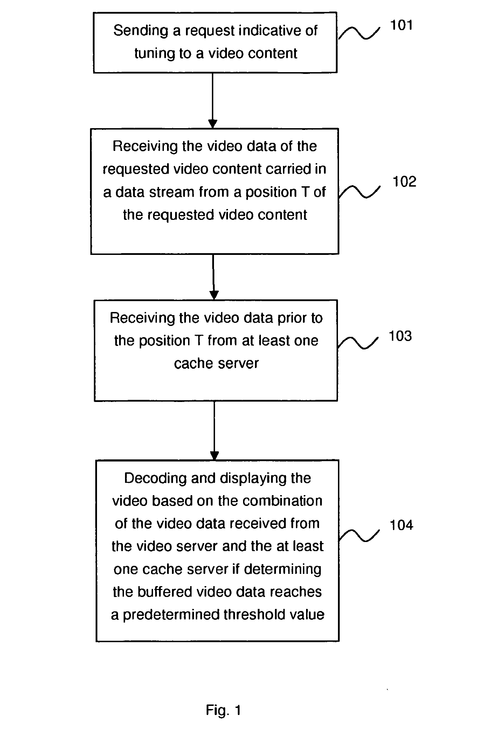

Fig. 1 is a flow chart illustrating the channel changing process in the multicast environment in accordance with an embodiment of the present invention.
--In the step 101, a client device sends a request indicative of tuning to a video content, such as a TV channel. Usually, the request is sent by the client device when the client device is turned on or switched from a video content to another.
--In the step 102, in response to the request for the video content from the client device, the client device receives from the video server the video data of the requested video content in a data stream, and the video data carried in the data stream (hereinafter referred to as "future video data") is received from current playback position T of the requested video content. In such applications as video multicast services, due to the fact that the video content is transmitted in the form of a data stream, the client device can only receive the video data subsequent to the position T on the time axis through the multicast stream.
--In the step 103, the client device receives the video data of the requested video content prior to the position T on the time axis (hereinafter referred to as "past video data") from at least one cache server. The at least one cache server here is capable of providing the video data of the requested video content prior to the position T on the time axis. The cache server can be a dedicated server that keeps receiving the data stream of the requested video content and stores the video data contained in the received data stream, or a dedicated server that is instructed at a time point to begin to receive the data stream of the requested video content and stores the video data. The below method can be used by the client device to receive the past video data: the client device instructs the cache server to transmit the past video data in a backward manner from the position T, which means the past video data is transmitted in a direction from the position T to the beginning position of the requested video content. Because the past video data is transmitted in a backward manner, the client device or the cache device need not calculate and inform the cache server how much past video data is needed to be transmitted. As a consequence, it saves the time for such calculation and avoids the signal exchange therefore between the cache device and the client device. Herein, the cached past video data can be transmitted in a chunk as fast as the network resources allow.
--In the step 104, if it is determined that the buffered video data in the client device that is received from the video server and the at least one cache server reaches a predetermined threshold value, the client device decodes and displays the video based on the combination of video data from the video server and the at least one cache server. Herein, the threshold value is set to a value which enables the client device to smoothly decode and display the video content. Because the video data from the position T and the video data prior to the position T are received, the video data can be combined coherently at the position T by using the below method: Due to the video data, such as an access unit, is generally encapsulated with the Real-time Transport Protocol (RTP) before it is transmitted, the video data can be combined by sorting out the video data received from the video server and the at least one cache server based on the "sequence number" field in the RTP header.

Because the buffer is filled with the past video data in a backward manner from the at least one cache server besides the video data from the video server, less time will be used to fill the buffer to a predetermined threshold value so as to accelerate the channel change. When the buffered video data reaches a predetermined threshold value, the client device decodes the combined video data, and display the video content beginning with the video data having the least "Sequence Number". Furthermore, after the buffered data reaches a predetermined threshold value, the client device can either instruct the cache server to stop transmitting the past video data or discard the past video data received afterward.

Moreover, the threshold value can be either a static value or a dynamic value according to the requirements of the video content and/or features of the encoded video content, network conditions. When the threshold value is dynamically determined, it can be determined based on the control information of the video content, such as Virtual Buffer Verification (VBV) information in MPEG-4 Part2 or Hypothetical Reference Decoder (HRD) information in MPEG-4 AVS (Audio Video Standard)/H.264. Normally, the control information comprises HRD or VBV, time stamps, etc. Furthermore, the control information can be used to assist the client device to pitch a certain video frame accurately. For instance, during the decoding, the cpb_removal_delay and initial removal_delay in the HRD can be applied in checking the decoding frame number. The dpb_output_detay from the HRD can be combined with the obtained frame number to derive which frame should be displayed.

According to a variant of the present embodiment, the client device may receive the requested video content from another intermediate device communicatively connected between the video server and the client device, such as a router. The intermediate device is capable of relaying the requested video content that is received from the video server.

According to a variant of the present embodiment, if network resources, such as transmission bandwidth, are limited, and competition for such network resources exists between the connection carrying the future video data and the connection carrying the past video data, the connection carrying the future video data will be given a higher priority.

According to the present embodiment, the establishment of the transmission connections for the requested video content is initiated by the video server and the cache server separately in the step 102 and the step 103. However, according to a variant of the present invention, a central control device possessing all status information about the video server and the cache server, e.g. what content is currently available, is provided. Once the client intends to change to another video content, the request is sent to the central control device, and the central control device will instruct the video server having the requested video content and the cache server having the cached past video data of the requested video content to initiate a transmission connection with the client device.

According to a variant of the present embodiment, the execution of the step 102 and the step 103 can be interchangeable or simultaneous.

According to a variant of the present embodiment, it can also be applied to broadcast and unicast environments. Regarding the step 102 in the multicast environment of the present embodiment, the client device needs to join an existing multicast group for the requested video content or apply for a new multicast group for the requested video content and then join. However, in the broadcast environment, the client device simply receives the requested video content in an existing broadcast channel. In the unicast environment, a unicast transmission connection for transmitting data stream of the requested video content should be established between the client device and the video server.

According to a variant of the present embodiment, the cache server can be a module located in the video server, or an independent device in the network, or the buffer of another client device that buffers the received video content while receiving the requested video content in a data stream.

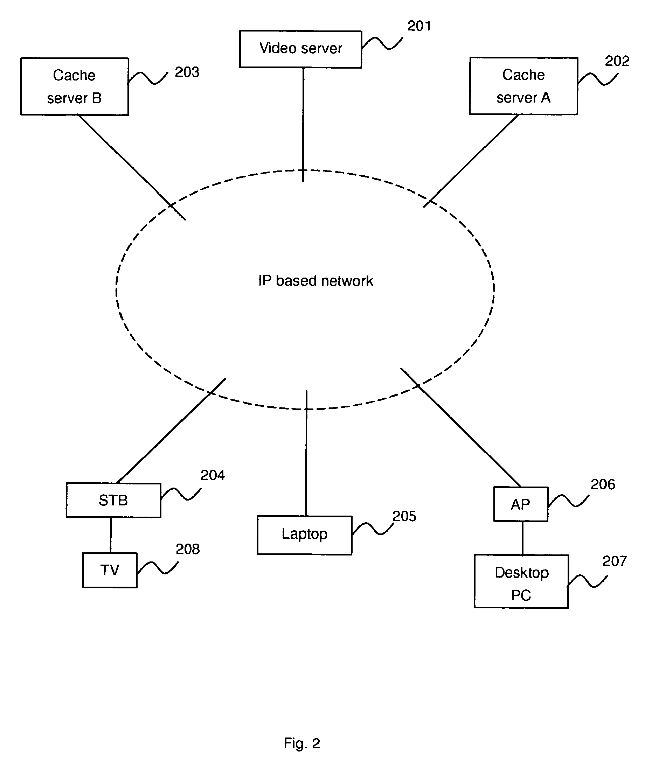

Fig. 2 is a schematic diagram illustrating a system for channel changing in accordance with the present embodiment. As shown in the Fig. 2, the system comprises a video server 201, cache server A 202, cache server B 203 and different kinds of client devices with abilities to decode the video data, such as a STB (set top box) connected with the TV 208, a laptop 205 and a desktop PC 207 connected to an AP (access point) 206. Assume that the video server has video channels from 1 to 10 each having a video content, and that the cache server A is used to cache channels from 1 to 5 while the cache server B is used to cache channels from 6 to 10. The user of the laptop 205 is viewing channel 1 when suddenly switching to channel 6. So the laptop 205 receives the video data of channel 6 from the video server 201 since the current playback position of the data stream and the past video data from the cache server B 203 in a backward manner from the current playback position. Furthermore, as an example, it could be possible that the user of TV 208 is currently viewing channel 6 through the STB 204 and the STB 204 has a buffer used to store the received video data from the video server. So the laptop 205 can establish a connection with the STB 204 to get the buffered video data in a backward manner. As a consequence, the delay in the procedure of changing channel is diminished. Furthermore, it is understood that a coordination mechanism shall be introduced if the past video data is received from more than one cached server. One simple mechanism is that the client device receives the past video data from the more than one cache server in backward manners and discards the identical video data which is received later.

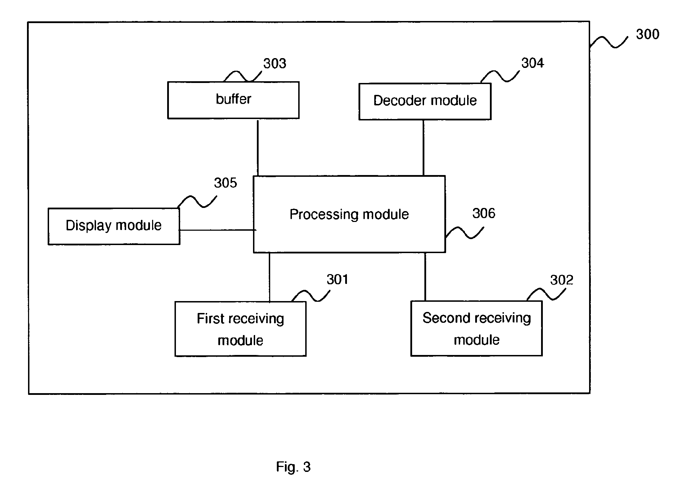

Fig. 3 is a block diagram of the client device in accordance with the present embodiment of the invention. The client device 300 comprises a first receiving module 301, a second receiving module 302, a buffer 303, a decoder module 304, a display module 305 and a processing module 306. The first receiving module 301 is used to receive the future video data of a requested video channel through a data stream. The second receiving module 302 is used to receive the past video data of the requested video channel from at least one cache server in backward manner. And the receiving module 302 will be instructed by the processing module 306 to discard the past video data that is received after buffered data in the buffer 303 reaches a predetermined threshold value. The buffer 303 is used to buffer the video data received by the first receiving module 301 and the second receiving module 302. The decoder module 304 is used to decode the video data in the buffer 303 so as to generate the decoded video data for the display module 305 to display. The processing module 306 is used to send a request for tuning to a channel when changing to another channel or the client device is turned on, instruct the first receiving module 301 to receive the future video data of the requested channel starting with a time position of the content of the requested channel and instruct, by e.g. sending a message containing an index indicative of the time position, the second receiving module 302 to receive in a backward manner the past video data of the requested channel prior to the time position, and instruct the decoder module 304 to decode the combination of the video data received by the first receiving module 301 and the second receiving module 302 when the buffered video data in the buffer 303 is determined to reach a predetermined threshold value. Furthermore, the processing module 306 could be configured to instruct the cache server to stop sending past video data if the video data in the buffer reaches a predetermined threshold value. It is understood that the client device need not include all modules mentioned above. For example, the display module 305 is redundant for a STB, and the decoder module 304 is redundant if a display device has the ability of decoding. Moreover, modules may be combined or split in a given implementation.

According to a variant of the present embodiment, the client device further comprises a data providing module. The data providing module is used to provide the video data of a current video channel buffered in the buffer 303 to another client device switching to this video channel.

According to a variant of the present embodiment, the method, system and device shown above in accordance with the present embodiment can be applied in other real-time resource delivery systems where the resource is delivered in a stream, such as an audio stream.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed.

## Claims

1. A method for a client device to receive a content, comprising the steps of:
sending a request for said content (101); and
in response to said request, receiving data of said content starting at a given time position of said content (102), said content is carried in a data stream from a first device, and receiving data of said content corresponding to a time position prior to said given time position of said content from at least one second device **characterized in that**
said data of said content corresponding to a time position prior to said given time position of said content is received from the at least one second device in a backward manner starting from said given time position (103).

2. The method according to the claim 1, **characterized by** further comprising:
displaying the content based on the data received from said first device and said at least one second device if determining the amount of data received from said first device and said at least one second device reaches a predetermined threshold value (104).

3. The method according to the claim 1 or 2, **characterized in that**, the data received from said first device and the data received from said at least one second device are combined based on sequence information associated with each data.

4. The method according to claim 1 or 2, **characterized by** further comprising:
in response to that the data received from said first device and said at least one second device reaches a predetermined threshold value, sending a message to said at least one second device indicative of stopping transmitting the data corresponding to the time prior to said given time position, or discarding further data received from said at least one second device.

5. The method according to the claim 1 or 2, **characterized in that**, before receiving the data from said first device and said at least one second device, said client device sends a message indicative of tuning said content to a control device, which is used to instruct the said first device to transmit the data of said content from said given time position in a data stream to said client device and said at least one second device to transmit the data of said content corresponding to the time prior to said given time position to said client device.

6. The method according to any of claims 1 to 5, **characterized in that** the data starting at said given time position is transmitted in a data stream in any of following modes: unicast, multicast or broadcast.

7. A client device for receiving a content, comprising:
a receiving module (301, 302) configured to receive data of said content starting at a given time position of said content, carried in a data stream from a first device and to receive data of said content from at least one second device; and **characterized in that** it further comprises:
a processing module (306) configured to send a message containing said given time position to request said data of said content from the at least one second device, wherein in response to the sent message, the data of said content is preceding said given time position is received from said at least one second device in a backward manner starting from said given time position.

8. The client device according to the claim 7, **characterized in that** said processing module (306) is further configured to send a message for requesting said content from said first device.

9. The client device according to the claim 7 or 8, **characterized by** further comprising:
a buffer (303) configured to buffer data of said content received from said first device and said at least one second device, wherein, the data of said content received from said first device and said at least one second device is combined based on sequence information associated with each data.

## Patentansprüche

1. Verfahren für eine Client-Vorrichtung zum Empfangen eines Inhalts, wobei das Verfahren die folgenden Schritte umfasst:
Senden einer Anforderung für den Inhalt (101); und Empfangen von Daten des Inhalts beginnend bei einer gegebenen Zeitposition des Inhalts in Reaktion auf die Anforderung (102), wobei der Inhalt in einem Datenstrom von einer ersten Vorrichtung übermittelt wird, und Empfangen von Daten des Inhalts, die einer Zeitposition vor der gegebenen Zeitposition des Inhalts entsprechen, von mindestens einer zweiten Vorrichtung, **dadurch gekennzeichnet, dass**
die Daten des Inhalts, die einer Zeitposition vor der gegebenen Zeitposition des Inhalts entsprechen, von der mindestens einen zweiten Vorrichtung beginnend von der gegebenen Zeitposition auf Rückwärtsart empfangen werden (103).

2. Verfahren nach Anspruch 1, **dadurch gekennzeichnet, dass** es ferner umfasst:
Anzeigen des Inhalts auf der Grundlage von Daten, die von der ersten Vorrichtung und von der mindestens einen zweiten Vorrichtung empfangen werden, falls bestimmt wird,
dass die Menge der von der ersten Vorrichtung und von der mindestens einen zweiten Vorrichtung empfangenen Daten einen vorgegebenen Schwellenwert erreicht (104).

3. Verfahren nach Anspruch 1 oder 2, **dadurch gekennzeichnet, dass** die von der ersten Vorrichtung empfangenen Daten und die von der mindestens einen zweiten Vorrichtung empfangenen Daten auf der Grundlage von den jeweiligen Daten zugeordneten Sequenzinformationen kombiniert werden.

4. Verfahren nach Anspruch 1 oder 2, **dadurch gekennzeichnet, dass** es ferner umfasst:
Senden einer Nachricht, die das Anhalten des Sendens der Daten, die der Zeit vor der gegebenen Zeitposition entsprechen, oder das Verwerfen weiterer Daten, die von der mindestens einen zweiten Vorrichtung empfangen werden, angibt, an die wenigsten eine zweite Vorrichtung, in Reaktion darauf, dass die von der ersten Vorrichtung und von der mindestens einen zweiten Vorrichtung empfangenen Daten einen vorgegebenen Schwellenwert erreichen.

5. Verfahren nach Anspruch 1 oder 2, **dadurch gekennzeichnet, dass** die Client-Vorrichtung vor Empfangen der Daten von der ersten Vorrichtung und von der mindestens einen zweiten Vorrichtung eine Nachricht sendet, die das Abstimmen des Inhalts auf eine Steuervorrichtung angibt, die dazu verwendet wird, die erste Vorrichtung anzuweisen, die Daten des Inhalts von der gegebenen Zeitposition in einem Datenstrom zu der Client-Vorrichtung zu senden, und die mindestens eine zweite Vorrichtung anzuweisen, die Daten des Inhalts, die der Zeit vor der gegebenen Zeitposition entsprechen, an die Client-Vorrichtung zu senden.

6. Verfahren nach einem der Ansprüche 1 bis 5, **dadurch gekennzeichnet, dass** die bei der gegebenen Zeitposition beginnenden Daten in einem Datenstrom in einer der folgenden Betriebsarten übertragen werden: Unicast, Multicast oder Rundsendung.

7. Client-Vorrichtung zum Empfangen eines Inhalts, wobei die Client-Vorrichtung umfasst:
ein Empfangsmodul (301, 302), das zum Empfangen von Daten des Inhalts, der bei einer gegebenen Zeitposition des Inhalts beginnt, die in einem Datenstrom von einer ersten Vorrichtung übermittelt werden, und zum Empfangen von Daten des Inhalts von mindestens einer zweiten Vorrichtung konfiguriert ist; und **dadurch gekennzeichnet, dass** sie ferner umfasst:
ein Verarbeitungsmodul (306), das zum Senden einer Nachricht, die die gegebene Zeitposition enthält, zum Anfordern der Daten des Inhalts von der mindestens einen zweiten Vorrichtung konfiguriert ist, wobei die Daten des Inhalts, die der gegebenen Zeitposition vorausgehen, in Reaktion auf die gesendete Nachricht von der mindestens einen zweiten Vorrichtung beginnend von der gegebenen Zeitposition auf Rückwärtsart empfangen werden.

8. Client-Vorrichtung nach Anspruch 7, **dadurch gekennzeichnet, dass** das Verarbeitungsmodul (306) ferner zum Senden einer Nachricht zum Anfordern des Inhalts von der ersten Vorrichtung konfiguriert ist.

9. Client-Vorrichtung nach Anspruch 7 oder 8, **dadurch gekennzeichnet, dass** sie ferner umfasst:
einen Puffer (303), der zum Puffern von Daten des von der ersten Vorrichtung und von der mindestens einen zweiten Vorrichtung empfangenen Inhalts konfiguriert ist, wobei die Daten des von der ersten Vorrichtung und von der mindestens einen zweiten Vorrichtung empfangenen Inhalts auf der Grundlage von den jeweiligen Daten zugeordneten Sequenzinformationen kombiniert werden.

## Revendications

1. Procédé permettant à un dispositif client de recevoir un contenu, comprenant les étapes suivantes :
envoi d'une demande pour ledit contenu (101) ; et
en réponse à ladite demande, réception des données dudit contenu commençant à un emplacement de temps donné dudit contenu (102), ledit contenu étant acheminé dans un flux de données depuis un premier dispositif, et réception des données dudit contenu correspondant à un emplacement de temps antérieur audit emplacement de temps donné dudit contenu provenant au moins d'un second dispositif **caractérisé en ce que**
lesdites données dudit contenu correspondant à un emplacement de temps antérieur audit emplacement de temps donné dudit contenu sont reçues depuis le second dispositif au moins, en marche arrière, à partir dudit emplacement de temps donné (103).

2. Procédé selon la revendication 1, **caractérisé en ce qu'**il comprend en outre :
l'affichage du contenu basé sur les données reçues dudit premier dispositif et au moins dudit second dispositif, si la détermination de la quantité de données reçues dudit premier dispositif et dudit second dispositif au moins atteint une valeur de seuil prédéterminée (104).

3. Procédé selon la revendication 1 ou 2, **caractérisé en ce que** les données reçues dudit premier dispositif et les données reçues dudit second dispositif au moins sont combinées d'après des informations séquentielles associées à chacune des données.

4. Procédé selon la revendication 1 ou 2, **caractérisé en ce qu'**il comprend en outre :
en réponse à cela, les données reçues dudit premier dispositif et dudit second dispositif au moins atteignent une valeur de seuil prédéfinie, envoyant un message audit au moins second dispositif indicatif de l'arrêt de la transmission des données correspondant au temps précédant ledit emplacement de temps donné, ou supprimant les données supplémentaires reçues dudit second dispositif au moins.

5. Procédé selon la revendication 1 ou 2, **caractérisé en ce qu'**avant la réception des données dudit premier dispositif et dudit au moins second dispositif, ledit dispositif client envoie un message indicatif de syntonisation dudit contenu à un dispositif de commande, qui sert à ordonner audit premier dispositif de transmettre les données dudit contenu dudit emplacement de temps donné dans un flux de données audit dispositif client et audit au moins second dispositif de transmettre les données dudit contenu correspondant au temps antérieur audit emplacement de temps donné audit dispositif client.

6. Procédé selon l'une quelconque des revendications 1 à 5, **caractérisé en ce que** les données démarrant audit emplacement de temps donné sont transmises dans un flux de données dans l'un quelconque des modes suivants : monodiffusion, multidiffusion ou diffusion.

7. Dispositif client pour la réception de contenu, comprenant :
un module de réception (301, 302) configuré pour recevoir les données dudit contenu démarrant à un emplacement de temps donné dudit contenu, acheminées dans un flux de données depuis un premier dispositif et pour recevoir des données dudit contenu provenant d'au moins un second dispositif ; et **caractérisé en ce qu'**il comprend en outre :
un module de traitement (306) configuré pour envoyer un message contenant ledit emplacement de temps donné pour demander lesdites données dudit contenu provenant d'un second dispositif au moins, où en réponse au message envoyé, les données dudit contenu qui précèdent ledit emplacement de temps sont reçues depuis un second dispositif au moins, en marche arrière, à partir dudit emplacement de temps donné.

8. Dispositif client selon la revendication 7, **caractérisé en ce que** ledit module de traitement (306) est en outre configuré pour envoyer un message pour demander ledit contenu provenant dudit premier dispositif.

9. Dispositif client selon la revendication 7 ou 8, **caractérisé par** et comprenant en outre :
une mémoire tampon (303) configurée pour mettre en mémoire tampon les données dudit contenu reçu dudit premier dispositif et d'un second dispositif au moins, dans laquelle les données dudit contenu reçu dudit premier dispositif et dudit second dispositif au moins sont combinées d'après les informations séquentielles associées à chacune des données.
